(19) Europäisches Patentamt / European Patent Office / Office européen des brevets

(11) **EP 4 083 821 B1**

(12) **EUROPEAN PATENT SPECIFICATION**

(45) Date of publication and mention
of the grant of the patent:
**22.10.2025  Bulletin 2025/43**

(21) Application number: **20904450.2**

(22) Date of filing: **16.07.2020**

(51) International Patent Classification (IPC):
**G06F 17/18** (2006.01)     **E21B 47/107** (2012.01)
**F17D 5/06** (2006.01)      **G01M 3/24** (2006.01)
**G01B 17/00** (2006.01)

(52) Cooperative Patent Classification (CPC):
**G01M 3/243; G06F 17/18; F17D 5/06**

(86) International application number:
**PCT/BR2020/050267**

(87) International publication number:
**WO 2021/127755 (01.07.2021 Gazette 2021/26)**

(54) **METHOD AND SYSTEM FOR ANALYZING AND PROVIDING A QUALITY INDEX FOR A NOISE CORRELATOR**

VERFAHREN UND SYSTEM ZUR ANALYSE UND BEREITSTELLUNG EINES QUALITÄTSINDEXES FÜR EINEN RAUSCHKORRELATOR

PROCÉDÉ ET SYSTÈME D'ANALYSE ET DE FOURNITURE D'INDICE DE QUALITÉ POUR DISPOSITIF DE MISE EN CORRÉLATION DE BRUITS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2019  BR 102019028015**

(43) Date of publication of application:
**02.11.2022  Bulletin 2022/44**

(73) Proprietors:
• **Companhia de Saneamento Básico do Estado De São Paulo - SABESP**
**05429-900 São Paulo (BR)**
• **Universidade Estadual Paulista "Júlio De Mesquita Filho" - UNESP**
**01049-010 São Paulo, SP (BR)**

(72) Inventors:
• **BRENNAN, Michael**
**15385-000 Ilha Solteira (BR)**
• **CASTILLO, Pedro**
**15385-000 Ilha Solteira (BR)**
• **LOBATO DE ALMEIDA, Fabrício**
**17602-496 Tupã (BR)**

(74) Representative: **Clarke, Modet y Cía., S.L.**
**C/ Suero de Quiñones 34-36**
**28002 Madrid (ES)**

(56) References cited:
**EP-A1- 2 950 072          CN-B- 108 731 886**
**JP-A- 2000 055 771        US-A1- 2013 085 690**
**US-A1- 2019 137 353       US-B1- 6 453 247**
**US-B2- 6 957 157          US-B2- 7 475 596**

EP 4 083 821 B1

## Description

### Field of the Invention

The present invention presents a method and system for analyzing the quality of signals coming from a leak noise correlator used, for example, in leak detection. More specifically, in the fields of electrical/mechanical engineering, leak detection, water & sanitation, water distribution, and pipeline maintenance.

### Backgrounds of the Invention

The increase in the number of inhabitants in large centers and the decrease in natural reservoirs of potable water puts water distribution companies under a certain pressure to avoid wastage in their transport. For this, leak detection and location techniques are widely used in policies to reduce actual water losses. One of the most widespread techniques worldwide is the cross-correlation of signals, and this technique has been used for years in the detection of leaks in underground metallic pipes applied in water distribution systems. However, this technique is affected when used in plastic pipes due to the high attenuation of the vibro-acoustic signal of the leak. The two main reasons for such failures are the operator's inexperience in leak detection situations in these pipes and the wrong estimation of the speed at which the vibro-acoustic signal (noise) of the leak propagates. Current correlators display numerous data that require greater technical expertise for their correct interpretation and do not have the means to assess the quality of the signal measured by the operator.

In the search for the state of the art in the scientific and patent literature, the following documents were found that address to the subject:

JP2017187337 discloses a water leak investigation method for locating the position of the water leak. The method consists of a first measurement step to measure vibrations from a network of pipes in each of the plurality of vibration sensors, where the resulting waveform is stored and then read, so that the presence of leakage can be determined by cross-correlation, a time synchronization step for synchronizing the time with the vibration sensor, and a second measuring step for measuring the vibration waveform for a certain period after time synchronization. However, this document does not present representative indices for the analysis of the quality of the measured signal, nor a graphical interface to facilitate the operator's visualization of the leak position.

JP2017173034 discloses a method for locating abnormal points in a pipe, where at least one vibration is measured at a plurality of locations on the pipe, where using the vibration cross-correlation function, two or more peak values of the cross-correlation are found, and it analyzes the time difference between peaks over a predetermined range to initiate a positioning correction step. However, this document does not present a graphical interface to facilitate the operator's visualization of both the measurement quality and the positioning of the leak.

Document CN107063584 discloses a method to discriminate and locate leaking boiler tubes, in which a data acquisition card is used to complete analog to digital conversion after signaling four sensors with synchronized phases, collecting 10,000 data samples and using these data for monitoring. However, this document does not present representative indices for the analysis of the measured signal quality, nor a graphical interface to facilitate the operator's visualization of both the measurement quality and the positioning of the leak.

US6453247 discloses a method for detecting leakage in pipes, in particular plastic pipes and other non-metallic pipes, comprising the steps of measuring a sound induced by leakage or vibration in a water pipe at two distinct but known locations and calculating the impulse response function or a post-filtration cross-correlation function based on the measured signals and determine the location of the leak in the pipe at a relative distance to one of the sensors. However, this document does not present representative indices for analyzing the quality of the measured signal, which may result in measurements with low quality, making it difficult to locate the leak position.

JP2000 055771 discloses a method for detecting leakage in a heat transfer tube providing an index of reliability.

Thus, from what can be seen from the researched literature, no documents were found anticipating or suggesting the teachings of the present invention, so that the solution proposed here has novelty and inventive step in face of the state of the art.

Accordingly, it is possible to observe that there is a need for a method that uses representative means to identify the quality of the signal measured by the operator through an interface to facilitate the operator's decision to perform a new measurement or maintain the measurement performed.

### Summary of the Invention

In this way, the present invention solves the problems of the state of the art from a method and system of analysis of the quality of measurement of the signal of a leak noise correlator used in the detection of leaks in pipes, where, through a set of tools, a calculation of at least one quality index is performed and a graphical display of the result obtained. The signal quality is classified and indicated to the operator, helping the operator to decide whether to perform a new measurement or to use the obtained result, thus avoiding receiving signals of poor quality that can lead to an erroneous location of the leak position that, consequently, prevents the operator from, for example, digging in a leak-free region instead of the correct region.

The subject matter of the invention is a method according to claim 1 and a system according to claim 5.

In a first object, the present invention presents a method of analyzing the quality of signals coming from a leak noise correlator that comprises the steps of: reception, by a processor, of a signal coming from the leak noise correlator; calculation, by the processor, of at least one quality index of the leak noise correlator signal; and classification of the measurement quality of the leak noise correlator signal, based on the calculated quality indices.

In a second object, the present invention presents a system for analyzing the quality of signals coming from a leak noise correlator that comprises: at least one leak noise correlator signal reception and display tool; a tool for calculating at least one leak noise correlator signal quality index; and a tool for graphical display of the signal quality of the leak noise correlator, based on the calculated quality index; wherein the quality index is defined by at least one of: frequency band index, coherence index, phase index, peak index, shape index or a combination thereof.

These and other objects of the invention will be immediately appreciated by those skilled in the art and will be described in detail below.

**Brief Description of Figures**

The following figures are presented:

Figure 1 shows an exemplification of a scheme in which sensors of a leak noise correlator are arranged for leak detection, where two sensors and a fluid distribution pipe are illustrated.

Figure 2 shows an embodiment of the parameterization interface for quality analysis of measurement of signals coming from a leak noise correlator and leak location.

Figure 3 shows an embodiment of the signal measurement quality analysis system interface from a leak noise correlator.

Figure 4a shows an embodiment of a low-quality measurement of cross-correlation and poor cross-correlation, wherein a graph of amplitude (from -1 to 1) by normalized delay (from -5 to 5) is illustrated, with the blue line being the cross-correlation function and the red dashed line the envelope of the cross-correlation function.

Figure 4b shows an embodiment of a high-quality cross-correlation measure and good cross-correlation, where a graph of amplitude (from -1 to 1) by normalized delay (from -5 to 5) is illustrated, with the blue line being the cross-correlation function and the red dashed line the envelope of the cross-correlation function.

Figure 5a shows an embodiment of the graph of the second peak delay time cross-correlation coefficient ($\hat{R}_{x1x2}(\hat{\tau})$) (from 0 to 1) by the ratio of upper limit ($\omega_{higher}$) by lower limit ($\omega_{lower}$) (from 1 to 3).

Figure 5b shows an embodiment of the graph of the frequency band index ($k_b$) by the ratio of upper limit ($\omega_{higher}$) by lower limit ($\omega_{lower}$) (from 1 to 3).

Figure 6a shows an embodiment of the ideal coherence index, where a coherence graph (0 to 1) by frequency delimited by upper limit ($\omega_{higher}$) and lower limit ($\omega_{lower}$) is illustrated.

Figure 6b shows an embodiment of the coherence index for an experimental case with noise, where a graph of coherence (0 to 1) by frequency delimited by the upper limit ($\omega_{higher}$) and lower limit ($\omega_{lower}$) is illustrated.

Figure 7a shows an embodiment of the phase of a signal for a considerably good case, where it is possible to observe that the signal approaches a straight line, being illustrated a graph of phase (from -40 to -34 radians) by frequency (from 600 at 800 Hertz).

Figure 7b shows an embodiment of the graph of the phase index ($k_{ph}$) by frequency (from 600 to 800 Hertz).

Figure 8 shows an embodiment of the graph of the cross-correlation coefficient (-1 to 1) by time delay (-0.04 to 0 second), being possible to observe how the noises affect the first highest peak and second highest peak.

Figure 9a shows an embodiment of the shape index for a good case, wherein a graph of cross-correlation coefficient (from -1 to 1) per time delay (from -0.02 to 0.05 seconds) is illustrated.

Figure 9b shows an embodiment of the shape index for a bad case, where in a graph of cross-correlation coefficient (from -1 to 1) per time delay (from -0.02 to 0.05 seconds) is illustrated.

**Detailed Description of the Invention**

The descriptions that follow are presented by way of example and do not limit the scope of the invention and will make the object of this patent application more clearly understood.

One of the types of leak detection in pipes used is the acoustic detection by leak noise correlators. These correlators have sensors that perform noise measurements simultaneously at several points in a pipe network. Conventionally, this technique uses cross-correlation to calculate the delay between two sensors connected to the pipe, where this delay, together with the propagation speed at which the noise generated by the leak propagates along the pipe, are used to estimate the location of the leak in relation to one of the sensors (distance from the leak to a sensor). The delay is estimated using the peak of the cross-correlation. One of the problems associated with these correlators is related to the quality of the performed measurement, which can also be added to the operator's inexperience in the decision factor regarding the analysis of the signals acquired by the correlator, which can lead to an erroneous location of the leak position.

The present invention is applied to the analysis of the quality of these leak noise correlator signals, not being restricted to the type or the way in which the correlator operates.

In a first object, the present invention presents a method of analyzing the quality of signals coming from a leak noise correlator that comprises the steps of: reception, by a processor, of a signal coming from the noise correlator; calculation, by the processor, of at least one quality index of the leak noise correlator signal; and classification of the measurement quality of the leak noise correlator signal, based on the calculated quality indices.

The quality index is at least one of: frequency band index; coherence index; phase index; shape index; or combination thereof. Optionaly, the quality index can also comprise a peak index. In one embodiment, the quality index is the frequency band index. In another embodiment, the quality index is the peak index in combination with the shape index. In another embodiment, the quality index is the combination of the frequency band index, the coherence index, the phase index, the peak index and the shape index.

Frequency band index

The frequency band index comprises the calculation of a relation of an upper limit and a lower limit of the frequency band of the noise correlator signal.

In one embodiment, the frequency band index is determined by the simplified cross-correlation coefficient given by:

$$R_{x1x2}(\tau) = \frac{\Delta\omega}{\pi} \frac{\sin(\Delta\omega(\tau - T_0)/2)}{\Delta\omega\,(\tau - T_0)/2} \cos(\omega_c(\tau - T_0)) \qquad (1)$$

Where $\Delta\omega = \omega_{higher} - \omega_{lower}$ is the band range in which leakage noise is present, $\omega_c = (\omega_{higher} + \omega_{lower})/2$ is the center frequency of the band, $\tau$ is the time interval, $T_0$ is the time delay caused by noise, $R_{x1x2}$ is the cross-correlation function of two leakage signals from the leak noise correlator sensor $x1$ and $x2$, $\omega_{higher}$ is the upper limit of the frequency range and $\omega_{lower}$ is the lower limit of the frequency range . This can be written in non-dimensional form as:

$$\hat{R}_{x1x2}(\hat{t}) = \frac{R_{x1x2}(\tau)}{\Delta\omega/\pi} = \frac{\sin(\hat{t})}{\hat{t}} \cos\left(\frac{2\omega_c\hat{t}}{\Delta\omega}\right)$$

$$\hat{R}_{x1x2}(\hat{t}) = \frac{\sin(\hat{t})}{\hat{t}} \cos\left(\left(\frac{\omega_{higher}/\omega_{lower} + 1}{\omega_{higher}/\omega_{lower} - 1}\right)\hat{t}\right) \qquad (2)$$

where  $\hat{t} = \Delta\omega\frac{\tau - T_0}{2}$  and $\hat{R}_{x1x2}$ is the cross-correlation function in non-dimensional form.

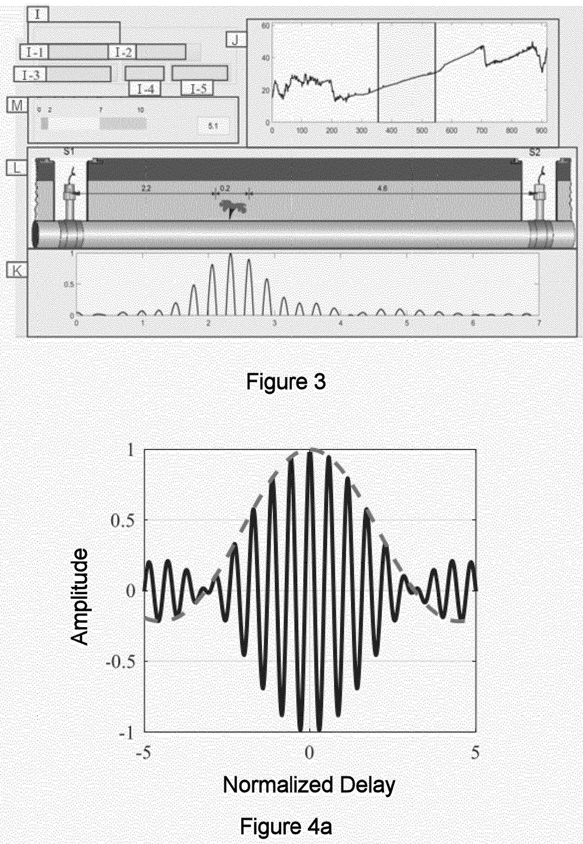

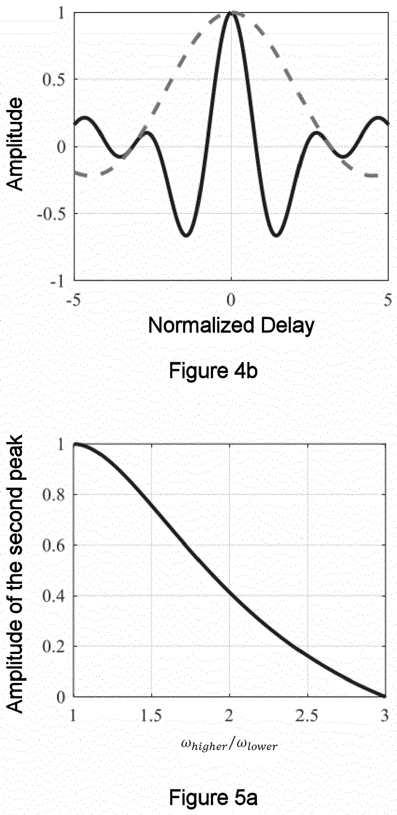

Equation (2) is plotted in figure 4a and figure 4b, where in figure 4a the upper limit ($\omega_{higher}$) / lower limit ($\omega_{lower}$) = 1.2, and it is possible to observe that the signal has a poor shape. In figure 4b, $\omega_{higher}/\omega_{lower} = 3$, and it is possible to observe that the signal has a good shape. With this, it is possible to observe that the upper limit / lower limit controls the oscillations of $\hat{R}_{x1x2}(\hat{t})$ and, when the upper limit / lower limit grows, the maximum peak can be clearly identified in comparison with the second peak of the cross-correlation function. In all cases, the maximum peak of the cross-correlation function is at $\hat{t}=0$, which corresponds to $\tau = T_0$.

Considering the maximum peak as the first peak, an approximate value of the closest peak is determined by setting the second term of equation (2) to 1, which occurs when $\hat{t}$ is a multiple of $2\pi$, thus obtaining:

$$\hat{t} = 2\pi\left(\frac{\omega_{higher}/\omega_{lower} - 1}{\omega_{higher}/\omega_{lower} + 1}\right) \qquad (3)$$

Repositioning the first term of equation (2), the second peak is given by the following formula:

$$\hat{R}_{x1x2}\left(\hat{\tau}|_{second\ peak}\right) = \frac{\sin\left(2\pi(\omega_{higher}/\omega_{lower} - 1)/(\omega_{higher}/\omega_{lower} + 1)\right)}{2\pi(\omega_{higher}/\omega_{lower} - 1)/(\omega_{higher}/\omega_{lower} + 1)} \quad . \tag{4}$$

Where $\hat{\tau}|_{second\ peak}$ is the $\hat{\tau}$ of the second peak. Equation (4) is plotted on the graph of figure 5a against the ratio of upper limit / lower limit ($\omega_{higher}/\omega_{lower}$).

For small values of $\omega_{higher}/\omega_{lower}$, the second peak has the same amplitude as the first peak and is also close to the value of 1. For high values of $\omega_{higher}/\omega_{lower}$, the second peak has a value close to zero. A low frequency range index is when the signal shape is not good and high when the opposite happens. Finally, the frequency band index is given by the following equation:

$$k_b = 1 - \hat{R}_{x1x2}\left(\hat{\tau}|_{second\ peak}\right) \quad . \tag{5}$$

Equation (5) is plotted on graph 5b against the proportion $\omega_{higher}/\omega_{lower}$.

In one embodiment, the Normalized Cross Spectral Density (NCSD) modulus is used to define the band at which leakage signal exists. These measurements are taken when the amplitude of the NCSD modulus is above 0.5, where it is possible to notice that the leakage energy is located between the frequency range defined by this threshold. In this way, if the signal is only correlated using the information contained in this range, the signal delay via cross-correlation, which is a measure of similarity, provides the signal delay of the leakage energy, with noise attenuated outside it due to filtering, thus providing a more robust estimate from the point of view of the attenuation of spurious signals that can corrupt the signal delay estimate. In another embodiment, an amplitude of the NCSF modulus above 0.1 is alternatively considered for defining the leakage signal band.

The frequency band directly interferes with the cross-correlation; in this way the theoretical equation (4) of the normalized cross-correlation is calculated and the value of the second theoretical peak is estimated. Depending on the ratio between the lower and upper limits, this second peak can be more or less high. If it is too high, the second peak can mask the main peak, causing an erroneous signal delay decision. For this case, the frequency band index is very low. If the second peak is small due to the relation between the frequency band boundaries, then there will be a band quality index of acceptable frequency.

Coherence index

The coherence index comprises calculating the relation between an actual coherence power of the leak noise correlator signal and a theoretical coherence power.

In one embodiment, the coherence index is determined from the coherence function, using the bandwidth in which the leakage is present. The coherence function $\gamma^2_{x1x2}$ is given by the following formula:

$$\gamma^2_{x1x2} = \frac{|S_{x1x2}(\omega)|^2}{S_{x1x1}(\omega)S_{x2x2}(\omega)} \tag{6}$$

where $S_{x1x2}(\omega)$ is the cross spectral density between the measured signals, $S_{x1x1}(\omega)$ and $S_{x2x2}(\omega)$ are the power spectral density functions of $x1$ and $x2$ respectively and $\omega$ is the circular frequency. This function which represents the linear association between the measured signals has limits of $0 \leq \gamma^2_{x1x2} \leq 1$. If the leakage signals are linearly related, the coherence is 1 (theoretical coherence power). There are always noises present in the system, so they are partially linearly related (actual coherence power).

Accordingly, the coherence index is considered as the relation of the power of the coherence signal (theoretical) by the power of the coherence signal plus the power of the coherence noise (actual) and is given by the following formula:

$$k_{co} = \frac{\sum_{j=1}^{m-1} \gamma^2_{x1x2}(\omega_j)}{m-1} \tag{7}$$

where m is the number of points, $\omega_j$ is the $j$-th frequency in the band limited *by* $\omega_{higher}$ and $\omega_{lower}$, which are the frequencies where there is the leakage noise.

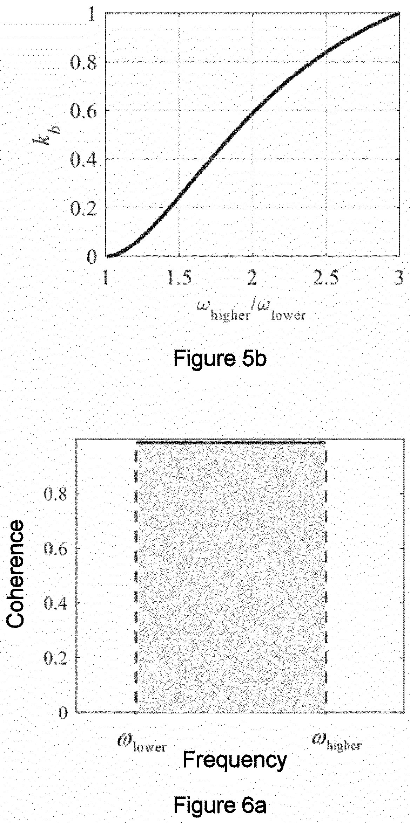

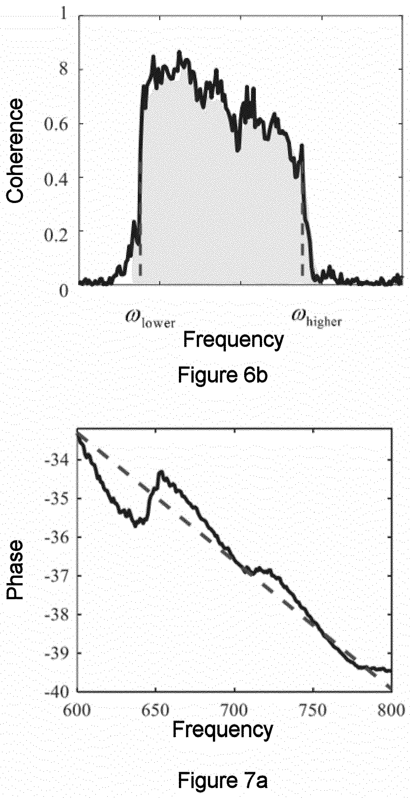

For the purposes of exemplification and understanding of the present invention, the actual theoretical coherence can be compared to a square window with lower and upper limits close to the frequency band given above and with amplitude equal to one as illustrated in Figure 6a. An actual signal, however, has a coherence generally less than one and is noisy as illustrated in Figure 6b. The coherence quality index is the ratio between the actual coherence power and the theoretical coherence power, that is, the noise between the two. In one embodiment, the noise is high and, consequently, the coherence quality index is low. In another embodiment, the noise is low and the coherence quality index is high.

Phase index

The phase index comprises superposition calculation between a leak noise correlator signal phase and a previously calculated theoretical phase.

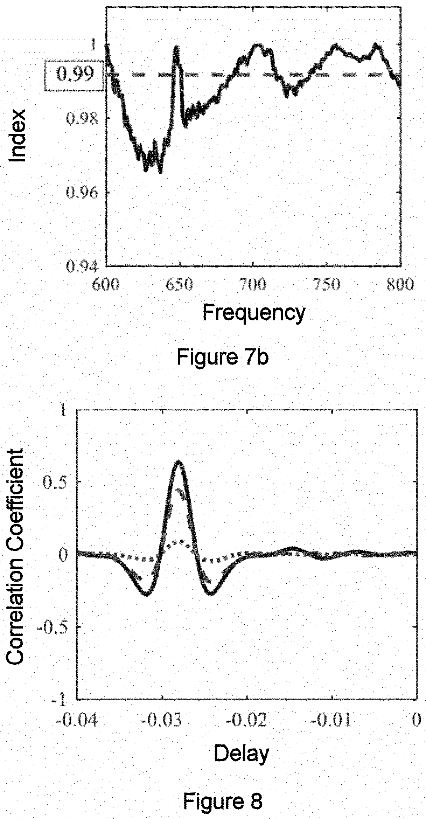

In one embodiment, the phase index is related to the phase of the cross spectral density. A pure time delay between the resulting signals in phase that changes linearly with frequency as illustrated in Figure 7a. However, due to severe reasons including noise, structural dynamics of the pipe system and wave reflections from discontinuities in the pipe system, the delay does not pass through the origin, and distortions are observed as seen in Figure 7b.

The index is obtained by comparing the cross spectral density phase with the adjusted phase using the least squares method. For this comparison, the standard deviation is calculated. The data used is in the frequency band range where the leakage noise is present. This value is zero whenever it has no variability, so this has been modified to have 1 as the maximum and zero as the minimum value of the index. Thus, the phase index is given by the following formula:

$$k_{ph} = 1 - \sqrt{\left(\frac{1}{m-1}\right)(|r| - \mu_r)^2} \qquad (8)$$

where $m$ is the number of points, $r = |r_{ph} - 1|$, $\mu_r$ is the mean of $r$ and $r_{ph}$ is the relation of the experimental phase to a best fit (least squares) of the same. The adjusted phase is given by $\phi(\omega_j) = p\omega_j + b$, such that $p$ and $b$ are acquired by the following formulas:

$$p = \frac{m \sum_{j=1}^{m}\left(\omega_j \phi(\omega_j)\right) - \sum_{j=1}^{m} \omega_j \sum_{j=1}^{m}\left(\phi(\omega_j)\right)}{m \sum_{j=1}^{m}(\omega^2{}_j) - \left(\sum_{j=1}^{m} \omega_j\right)^2}$$

$$b = \frac{\sum_{j=1}^{N}\left(\phi(\omega_j)\right)\sum_{j=1}^{N} \omega^2{}_j - \sum_{j=1}^{N}\left(\omega_j \phi(\omega_j)\right)\sum_{j=1}^{N} \omega_j}{N \sum_{j=1}^{N}(\omega^2{}_j) - \left(\sum_{j=1}^{N} \omega_j\right)^2} \qquad (9)$$

where $\phi(\omega_j)$ is the experimental phase and $\omega_j$ is the $j$-th frequency in the interval where leakage is present. In figure 6a, an experimental case is shown where the original phase is adjusted. In figure 6b, the value of the phase index is shown.

The signal delay can be obtained by the peak of the cross-correlation, or by the phase of the Cross Spectral Density. The phase, when it has correlated leakage energy, is very similar to a straight line in the frequency band where there is leakage energy. The gradient of this straight line is related to the signal delay (equal to the peak of the cross-correlation), but this is in the frequency domain. If a straight line is drawn (as in the theoretical model) and a good superposition between the two is achieved, then the index is considered good.

Peak index

The peak index comprises the calculation of maximum value of the noise correlator signal.

The index is determined by the cross-correlation calculation in which the cross-correlation function is expressed in a normalized form given by the following formula:

$$\rho_{x1x2}(\tau) = \frac{R_{x1x2}(\tau)}{\sqrt{R_{x1x1}(0)R_{x2x2}(0)}} \qquad (10)$$

where $R_{x1x1}(0)$ and $R_{x2x2}(0)$ are values of the autocorrelation function $R_{x1x1}(\tau)$ and $R_{x2x2}(\tau)$ at $\tau = 0$ and $\rho_{x1x2}$ is the correlation coefficient between $x1$ and $x2$. The peak in the cross-correlation calculation can vary because of noise, reflections (apparent peak), attenuation, etc., as illustrated in Figure 8. Thus, the peak index is given by the following formula:

$$k_{pk} = max\left(\rho_{x1x2}(T_0)\right) \qquad (11)$$

This occurs when $\tau = T_0$ and the index value is between 0 and 1.

The cross-correlation coefficient is used to calculate this index. For this case, the cross-correlation coefficient peak is always less than or equal to 1 of amplitude, in addition to giving the delay between the measured vibration signals of the leakage. When the peak is equal to 1, it means that the leakage signals are very similar and are not corrupted (or slightly corrupted). The smaller the peak, the smaller the correlation between the measured signals and the larger the uncertainties related to the signal delay estimation as illustrated in figure 8b.

Shape index

The shape index comprises identifying a second highest peak in the noise correlator signal and subtracting a unit.

In one embodiment, what differs the shape index from the frequency band index is that the latter uses normalized actual cross-correlation. This normalized actual equation can be affected by reflections present in the vibrating leakage signals, which can be caused, for example, due to the presence of "elbows" or pipe connections. This reflection directly affects the second peak of the cross-correlation. Therefore, the second peak can be altered as a function of the frequency band (frequency band index) or by the presence of reflections (shape index).

The index was constructed using the relation between the normalized peak from the cross-correlation calculation and the second highest peak. It is observed in a practical situation that, because of reflections or correlated noises, the shape of the correlation function can undergo some changes. The ideal value of the index is when the difference between these values is close to one. Thus, using the cross-correlation calculation, the following formula is obtained:

$$k_{sh} = 1 - h_{second\ peak} \qquad\qquad (12)$$

where $h_{second\ peak}$ is the height of the second highest peak.

Correlator signal quality classification

The measurement quality classification step comprises a calculation by means of a statistical tool that transforms the quality indices into a single value. Said statistical tool performs a calculation with the indices obtained in order to expose a harmonization of the indices and generate a representative value capable of being arranged, for example, in a representation scale. With this representation scale it is possible to visualize the quality of the correlator signal, from the obtained indices.

For purposes of exemplification, without limiting the scope of the invention, the statistical tool performs the calculation through functions such as: arithmetic mean, median, mode, geometric mean, harmonic mean, etc.

In one embodiment, the statistical tool performs the calculation of the final index through the geometric mean of the calculated indices, where this function is less susceptible to large variations as a result of fluctuations in the values of the individual indices, thus having greater accuracy. Thus, the signal quality index provided by noise correlators is given by the following formula:

$$K = \sqrt[5]{k_b k_{co} k_{ph} k_{pk} k_{sh}} \ . \qquad\qquad (13)$$

In one embodiment, the indices are positioned in levels, where from 0 to 0.2 is determined as poor quality, from 0.2 to 0.7 as good quality and from 0.7 to 1 as excellent quality. In another embodiment, the indices are classified by color, where from 0 to 0.2 is determined as poor quality and colored red, from 0.2 to 0.7 is determined as good quality and colored yellow, and from 0.7 a 1 is determined to be excellent quality and colored green. In another embodiment, the indices are positioned at levels where from 0 to 2 is determined as poor quality, from 2 to 7 as good quality, and from 7 to 10 as excellent quality. In another embodiment, the indices are classified by color, where 0 to 2 is determined as poor quality and colored red, 2 to 7 is determined as good quality and colored yellow, and 7 to 10 is determined as excellent quality and colored green.

In a second object, the present invention presents a system for analyzing the quality of signals coming from a leak noise correlator that comprises: at least one leak noise correlator signal reception and display tool; a tool for calculating at least one leak noise correlator signal quality index; and a tool for graphical display of the signal quality of the leak noise correlator, based on the calculated quality index; wherein the quality index is defined by at least one of: frequency band index, coherence index, phase index, peak index, shape index or a combination thereof.

The graphical display tool comprises a classification of the signal quality of the leak noise correlator, wherein said classification is given from a geometric mean calculation of the calculated quality indices. In one embodiment, the graphical display tool is the computer software interface.

In one embodiment, the system of the present invention is configured to implement the analysis method as previously described.

In one embodiment, the analysis system of quality of signals coming from a leak noise correlator is implemented by means of computer software. In another embodiment, the quality analysis system of signals coming from a leak noise correlator is embedded together with the leak noise correlator. In another embodiment, the signal quality analysis system coming from a leak noise correlator is embedded together with a plurality of leak noise correlators.

In this way, it is possible to observe that the present invention solves the problems of the state of the art with a method and system of signal quality analysis coming from a leak noise correlator, where, by means of tools, the calculation and display of quality indices is performed, based on a signal measured by the leak noise correlator, where these indices allow performing a classification of the quality of the measured signal, making it easier for the operator to make a decision according to the indicated index.

## Example 1 - Analysis of measurement quality of a signal coming from leak noise correlator in plastic pipes

The examples shown here are intended only to exemplify one of the numerous ways of carrying out the invention, however without limiting the scope of the same.

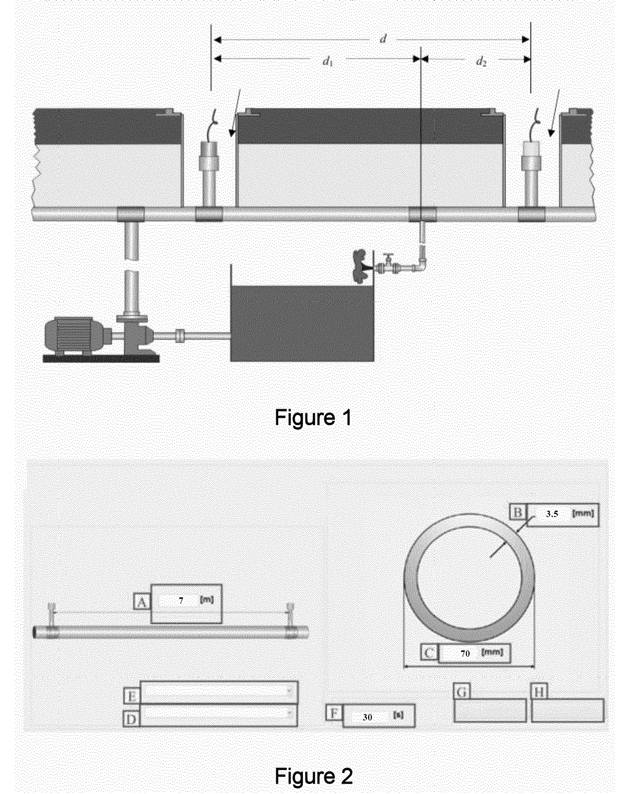

The analysis system of signal quality measurement was used, coming from a leak noise correlator, where the tools used in the system were executed by a software with a graphical interface. There were also used two sensors of leak noise correlator positioned along a pipe, an immobile polyvinyl polychloride (PVC) pipe with a wall thickness of 3.5 mm and a diameter of 70 mm surrounded by a sandy ground, a tank for the collection of water from leak tests, a pump to bring water from the tank to the pipeline and a leak simulation valve as illustrated in figure 1.

There were entered into the interface the distance of 7 meters between two sensors of leak noise correlator (A), the wall thickness of 3.5 millimeters of the pipe (B), the diameter (C) of 70 millimeters of the pipe, the type of soil (E) used was sandy, the pipe material (D) used was polyvinyl polychloride (PVC) and the analysis time (F) was 30 seconds and then the advance button (H) was pressed.

After pressing the advance button (H), the software went to a second interface containing new buttons such as the new acquisition button (1-1). The new acquisition button (I-1) was then activated to analyze the measurement quality of the signal coming from the correlator. It was then displayed a phase graph in radians per frequency in Hertz with the received signal (J), a graph of correlation function as a function of distance in meters (K), an illustration representing the pipe with the two sensors of leak noise correlator (L), the distance between them and the distance from the localized noise, and the correlation quality classification (M), as illustrated in figure 3. The displayed leak noise correlator signal measurement quality (M) classification was 0.51, characterizing the measurement with good signal quality. The operator then decided to take a measurement again and pressed the new acquisition button (I-1) again.

After pressing the new acquisition button (1-1) again, the same graphs of the old measurement were displayed, although analyzing the new signal acquisition and the quality classification (M) of measurement of the leak noise correlator signal displayed was 0.2, characterizing the measurement with poor signal quality. The operator then pressed the new acquisition button (1-1) again.

This time, when pressing the new acquisition button (1-1) again, the displayed graphs were the same as in the old assessments, but with the new acquired signal and new quality classification (M) for measuring the leak noise correlator signal. The measurement quality (M) classification of the displayed correlator signal, this time, was 0.7, characterizing the measurement with excellent signal quality.

## Example 2 - Assessment of signal quality indices from leak noise correlator

The quality analysis system of signal measurement was used, coming from a leak noise correlator, where the tools used in the system were executed by a software with a graphical interface. Five indices were calculated to assess the quality index of the signal measurement coming from the leak noise correlator: the frequency band index, the coherence index, the phase index, the peak index and the shape index. Known experimental data were used to assess the indices.

Known experimental data were entered into the software graphical interface, such as the distance of 7 meters between two sensors of leak noise correlator (A), the wall thickness of 3.5 millimeters of the pipe (B), the diameter (C) of 70 millimeters of the pipe, the type of soil (E), sandy, the material of the pipe (D), polyvinyl polychloride (PVC), and the analysis time (F) of 30 seconds, and then the advance button (H) was pressed.

The five indices were then calculated by the software:

### Frequency band index

The quality index calculation tool was used by the software, where equation (2) was used and it was possible to observe its behavior according to the upper limit / lower limit ratio as illustrated in figure 4a and figure 4b. In figure 4a, the upper limit ($\omega_{higher}$) / lower limit ($\omega_{lower}$) = 1.2 and it was possible to observe that the signal had a poor shape. In figure 4b,

$\omega_{higher}/\omega_{lower}$ = 3 and it was possible to observe that the signal had a good shape. With this, it was possible to observe that the upper limit / lower limit controlled the oscillations of $\hat{R}_{x1x2}(\hat{\tau})$, and when the upper limit / lower limit grew, the maximum peak could be clearly identified in comparison with the second peak of the cross-correlation function.

The software then used equation (4) with the received signal and plotted it as a function of the upper limit / lower limit ratio as illustrated in figure 5a; it was then possible to observe that for small values of $\omega_{higher}/\omega_{lower}$, the second peak had the same amplitude than the first peak and was also close to the value of 1. For high values of $\omega_{higher}/\omega_{lower}$, the second peak had a value close to zero. The frequency range index was low when the signal shape was not good and high when the opposite happened.

Then the software used equation (5) to determine the frequency band index and plotted against the upper limit/lower limit ratio as in figure 5b.

Furthermore, a threshold of 0.5 was adopted in the normalized cross spectral density modulus (NCSD), to define the band in which there is a leakage signal, as a reference value based on the concept of half-power frequency. From the studies carried out so far (data from the test fields of Canada, England, Brazil and Germany), it was noted that generally the leakage noise energy is located between the frequency range defined by the threshold of 0.5 and, thus, makes it possible to calculate the signal delay used to locate the leak with less interference from spurious noises.

### Coherence index

The quality index calculation tool was used by the software, where equation (6) was used to generate the coherence function $\gamma^2_{x1x2}$. A graph of ideal theoretical coherence ratio was then generated, where it was possible to observe that the graph resembled a square window with amplitude equal to one as illustrated in figure 6a, with the solid blue line being the cross-correlation function as frequency function and the dashed line the correlation function as the frequency function delimited by upper limit ($\omega_{higher}$) and lower limit ($\omega_{lower}$).

After the software used the input signal as a reference, the actual coherence was less than one and with noise, as illustrated in figure 6b, the blue line being the cross-correlation function as a frequency function and the dashed line the correlation function as the frequency function delimited by $\omega_{higher}$ and $\omega_{lower}$. The software then calculated the correlation index by equation (7).

### Phase index

The quality index calculation tool was used by the software, where a graph of the phase by frequency was generated, as illustrated in figure 7a, the blue line being the original phase and the red dashed line the adjusted phase, and it was possible to observe that when the signal was good, the phase resembled a straight line. The software then used equation (8) to calculate the phase index and then a graph of the phase index ($k_{ph}$) by frequency (from 600 to 800 Hertz) was generated, where the phase index is the red dashed line and the converted date is the solid blue line.

### Peak index

The quality index calculation tool was used by the software, where equation (10) was used to find the cross-correlation function in a normalized form and a graph of the cross-correlation coefficient (from -1 to 1) per time delay was generated (-0.04 to 0 second), as illustrated in figure 8, wherein three signal-to-noise ratio (SNR) signals are generated, with the solid blue line for SNR = 0, the red dashed line for SNR = -5 and the green dotted line for SNR = -20. It was possible to observe that the peak in the cross-correlation calculation can vary because of noise, reflections (apparent peak), attenuation, etc. The software then used equation (11) to calculate the peak index.

### Shape index

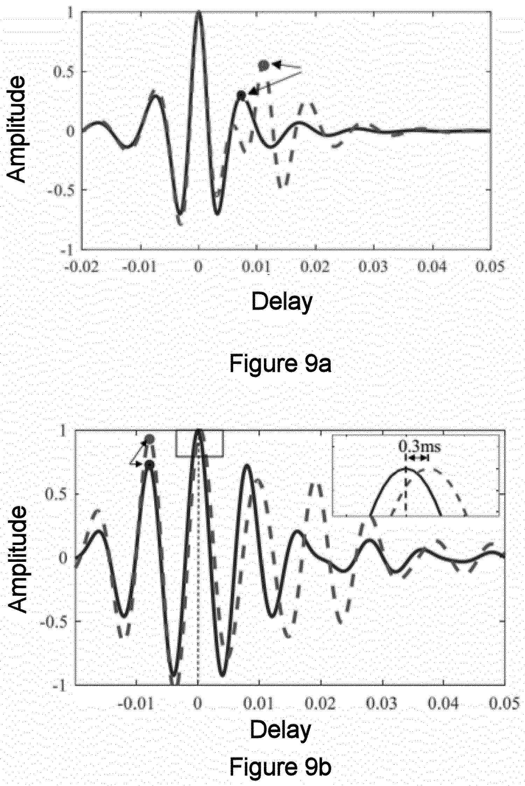

The quality index calculation tool was used by the software, where equation (1) was used to find the cross-correlation coefficient and then two graphs were generated, where the first graph of the cross-correlation coefficient by time delay with a broad frequency band as illustrated in figure 9a, the solid blue line being the cross-correlation coefficient without reflection and the red dashed line with reflection, where it was possible to observe the increase of the second highest peak of the coefficient. The second graph generated was the time delay cross-correlation coefficient with a narrow frequency band, as illustrated in figure 9b, the solid blue line being the cross-correlation coefficient without reflection and the red dashed line with reflection, where it was possible to observe an increase of the second highest peak of the cross-correlation by interferences such as noise or reflections.

It was possible to observe that there was a displacement of the position of the first highest peak due to the interferences, which caused the erroneous location of the noise position. Equation (13) was used by the software to calculate the shape index.

Correlator signal quality classification

For the selection of the statistical tool to be used in the classification of signal quality, it was noted that the arithmetic mean is easy to calculate and interpret, but can lead to erroneous conclusions when one of the variables (calculated indices) has a very extreme value. Thus, the geometric mean was chosen as an option, since it is less susceptible to these variations, and equation (14) was applied to perform the calculation. Thus, to calculate the quality classification of the correlator signal, the geometric mean of the five previously calculated indices was made.

With the calculation of the geometric mean, it is possible to represent the value related to the indices through a scale, this scale containing graphic elements that facilitate its interpretation, in which case different color scales are adopted for this representation. In this example, the geometric mean results are classified as: 0 to 0.2 is determined as poor quality and colored red; from 0.2 to 0.7 is determined as good quality and colored yellow; and 0.7 to 1 is determined as excellent quality and colored green. With this, this scale and results are displayed on the software graphic interface, indexing the classification of the quality of the measured signal.

Those skilled in the art will appreciate the knowledge presented herein and will be able to reproduce the invention in the embodiments presented and in other variants and alternatives, encompassed by the scope of the claims below.

**Claims**

1. A method of analysis and supply of quality index for leak noise correlator for the detection of leaks in a pipe, wherein the method comprises the steps of:

   a. reception, by a processor, of a signal coming from the leak noise correlator;
   b. calculation, by the processor, of at least one quality index of the leak noise correlator signal;

   wherein
   the method further comprises the step of:

   c. classification of the measurement quality of the leak noise correlator signal, based on the at least one calculated quality index;
   **characterized in that**
   the quality index is at least one of:

       - frequency band index, wherein calculating the frequency band index comprises a calculation of the relation of an upper limit and a lower limit of the frequency band of the leak noise correlator signal in which leakage noise is present;
       - coherence index, wherein calculating the coherence index comprises a calculation, using the bandwidth in which the leakage is present, of the relation between an actual coherence power of the leak noise correlator signal and a theoretical coherence power ;
       - phase index, wherein the phase index is related to phase of the cross spectral density, wherein the phase index comprises a superposition calculation between a leak noise correlator signal phase and a previously calculated theoretical phase, wherein the superposition calculation aligns only when the selected frequency bandwidth contains leak noise signal;
       - shape index, wherein the shape index calculation comprises an identification of a second highest peak in a leak noise correlator signal and subtraction of a unit; or
       - combination thereof.

2. The method of analysis according to claim 1, wherein the quality index is combined with a peak index, wherein calculating the peak index comprises calculation of the maximum value of the leak noise correlator signal.

3. The method of analysis according to claim 1 or 2, wherein the measurement quality classification step comprises the application of a statistical tool based on a plurality of calculated quality indices, the calculation being performed through one of the following functions: arithmetic mean, median, mode, geometric mean, or harmonic mean.

4. The method of analysis according to any of previous claims, wherein the leak noise correlator uses two sensors for performing noise measurements simultaneously, the two sensors being connected to the pipe with a distance therebetween.

5. A system of analysis and supply of quality index for leak noise correlator for the detection of leaks in a pipe, wherein the system comprises:

    a. at least one leak noise correlator signal reception and display tool configured to receive a signal coming from the leak noise correlator;
    b. a tool for calculating at least one leak noise correlator signal quality index; and
    c. a tool for graphical display of the signal quality of the leak noise correlator, based on the at least one calculated quality index;

**characterized in that**:

    - the signal quality index is defined by at least one of:

        frequency band index, wherein calculating the frequency band index comprises a calculation of the relation of an upper limit and a lower limit of the frequency band of the leak noise correlator signal in which leakage noise is present;
        coherence index, wherein calculating the coherence index comprises a calculation, using the bandwidth in which the leakage is present, of the relation between an actual coherence power of the leak noise correlator signal and a theoretical coherence power;
        phase index, wherein the phase index is related to phase of the cross spectral density, wherein the phase index comprises a superposition calculation between a leak noise correlator signal phase and a previously calculated theoretical phase, wherein the superposition calculation aligns only when the selected frequency bandwidth contains leak noise signal;
        shape index, wherein the shape index calculation comprises an identification of a second highest peak in a leak noise correlator signal and subtraction of a unit; or a combination thereof.

6. The analysis system according to claim 5, wherein the quality index is combined with a peak index, wherein calculating the peak index comprises calculation of the maximum value of the leak noise correlator signal.

7. The analysis system according to claim 5 or 6, wherein the graphic display tool comprises a classification of the signal quality of the leak noise correlator, based on calculation with a statistical tool based on the a plurality of calculated indices, the calculation being performed through one of the following functions: arithmetic mean, median, mode, geometric mean, or harmonic mean.

8. The analysis system according to any of claims 5 to 7, wherein the leak noise correlator uses two sensors for performing noise measurements simultaneously, the two sensors being connectable to the pipe with a distance therebetween.

**Patentansprüche**

1. Verfahren zur Analyse und Bereitstellung eines Qualitätsindex für einen Leckgeräuschkorrelator zur Erkennung von Leckagen in einer Rohrleitung, wobei das Verfahren die folgenden Schritte umfasst:

    a. Empfang eines von dem Leckgeräuschkorrelator ausgehenden Signals durch einen Prozessor;
    b. Berechnung mindestens eines Qualitätsindex des Leckgeräuschkorrelatorsignals durch den Prozessor;

wobei das Verfahren ferner den folgenden Schritt umfasst:

    c. Klassifizierung der Messqualität des Leckgeräuschkorrelatorsignals basierend auf dem mindestens einen berechneten Qualitätsindex;
    **dadurch gekennzeichnet, dass** der Qualitätsindex mindestens einer der folgenden ist:

        - Frequenzbandindex, wobei die Berechnung des Frequenzbandindex eine Berechnung des Verhältnisses zwischen einer Obergrenze und einer Untergrenze des Frequenzbandes des Leckgeräuschkorrelatorsignals, in dem Leckgeräusche auftreten, umfasst;

- Kohärenzindex, wobei die Berechnung des Kohärenzindex eine Berechnung des Verhältnisses zwischen einer tatsächlichen Kohärenzleistung des Leckgeräuschkorrelatorsignals und einer theoretischen Kohärenzleistung anhand der Bandbreite, in der die Leckage auftritt, umfasst;
- Phasenindex, wobei der Phasenindex sich auf die Phase der Kreuzspektraldichte bezieht, wobei der Phasenindex die Berechnung einer Überlagerung zwischen einer Phase des Leckgeräuschkorrelatorsignals und einer zuvor berechneten Sollphase umfasst, wobei die Überlagerungsberechnung nur dann übereinstimmt, wenn die ausgewählte Frequenzbandbreite ein Leckgeräuschsignal enthält;
- Formindex, wobei die Berechnung des Formindex die Ermittlung einer zweithöchsten Spitze in einem Leckgeräuschkorrelatorsignal und die Subtraktion einer Einheit umfasst; oder
- eine Kombination daraus umfasst.

2. Analyseverfahren nach Anspruch 1, wobei der Qualitätsindex mit einem Spitzenindex kombiniert wird, wobei die Berechnung des Spitzenindex die Berechnung des Maximalwerts des Leckgeräuschkorrelatorsignals beinhaltet.

3. Analyseverfahren nach Anspruch 1 oder 2, wobei der Schritt der Messqualitätsklassifizierung die Anwendung einer statistischen Auswertungseinheit basierend auf einer Vielzahl von berechneten Qualitätsindizes umfasst, wobei die Berechnung durch eine der folgenden Funktionen erfolgt: arithmetisches Mittel, Median, Modus, geometrisches Mittel oder harmonisches Mittel.

4. Analyseverfahren nach einem der vorstehenden Ansprüche, wobei der Leckgeräuschkorrelator zwei Sensoren, die voneinander beabstandet an die Rohrleitung angeschlossen sind, zur gleichzeitigen Durchführung von Geräuschmessungen aufweist.

5. System zur Analyse und Bereitstellung eines Qualitätsindex für einen Leckgeräuschkorrelator zur Erkennung von Leckagen in einer Rohrleitung, wobei das System Folgendes umfasst:

a. mindestens eine Vorrichtung für Empfang und Anzeige von Leckgeräuschkorrelatorsignalen, die für den Empfang eines vom Leckgeräuschkorrelator ausgehenden Signals ausgelegt ist;
b. eine Einheit zur Berechnung mindestens eines Leckgeräuschkorrelatorsignalqualitätsindex; und
c. eine Vorrichtung zur grafischen Anzeige der Signalqualität des Leckgeräuschkorrelators basierend auf dem mindestens einen berechneten Qualitätsindex;

**dadurch gekennzeichnet, dass**:

- der Signalqualitätsindex durch mindestens eines der folgenden Elemente bestimmt wird:

Frequenzbandindex, wobei die Berechnung des Frequenzbandindex eine Berechnung des Verhältnisses zwischen einer Obergrenze und einer Untergrenze des Frequenzbandes des Leckgeräuschkorrelatorsignals, in dem Leckgeräusche auftreten, umfasst;
Kohärenzindex, wobei die Berechnung des Kohärenzindex eine Berechnung des Verhältnisses zwischen einer tatsächlichen Kohärenzleistung des Leckgeräuschkorrelatorsignals und einer theoretischen Kohärenzleistung anhand der Bandbreite, in der die Leckage auftritt, umfasst;
Phasenindex, wobei der Phasenindex sich auf die Phase der Kreuzspektraldichte bezieht, wobei der Phasenindex die Berechnung einer Überlagerung zwischen einer Phase des Leckgeräuschkorrelatorsignals und einer zuvor berechneten Sollphase umfasst, wobei die Überlagerungsberechnung nur dann übereinstimmt, wenn die ausgewählte Frequenzbandbreite ein Leckgeräuschsignal enthält;
Formindex, wobei die Berechnung des Formindex die Ermittlung einer zweithöchsten Spitze in einem Leckgeräuschkorrelatorsignal und die Subtraktion einer Einheit umfasst;
oder eine Kombination daraus umfasst.

6. Analysesystem nach Anspruch 5, wobei der Qualitätsindex mit einem Spitzenindex kombiniert wird, wobei die Berechnung des Spitzenindex die Berechnung des Maximalwerts des Leckgeräuschkorrelatorsignals beinhaltet.

7. Analysesystem nach Anspruch 5 oder 6, wobei die Grafikanzeige eine Klassifizierung der Signalqualität des Leckgeräuschkorrelators mittels Berechnung mit einer statistischen Auswertungseinheit basierend auf einer Vielzahl von berechneten Indizes umfasst, wobei die Berechnung durch eine der folgenden Funktionen erfolgt: arithmetisches Mittel, Median, Modus, geometrisches Mittel oder harmonisches Mittel.

8. Analysesystem nach einem der Ansprüche 5 bis 7, wobei der Leckgeräuschkorrelator zwei Sensoren, die voneinander beabstandet an die Rohrleitung anschließbar sind, zur gleichzeitigen Durchführung von Geräuschmessungen aufweist.

**Revendications**

1. Procédé d'analyse et de fourniture d'un indice de qualité pour un corrélateur de bruit de fuite destiné à la détection de fuites dans une conduite, ledit procédé comprenant les étapes de :

   a. réception, par un processeur, d'un signal provenant du corrélateur de bruit de fuite ;
   b. calcul, par le processeur, d'au moins un indice de qualité du signal du corrélateur de bruit de fuite ;

   dans lequel le procédé comprend en outre l'étape de :

   c. classification de la qualité de mesure du signal du corrélateur de bruit de fuite, sur la base dudit au moins un indice de qualité calculé ;
   **caractérisé en ce que** l'indice de qualité est au moins un des indices suivants :

      - indice de bande de fréquence, dans lequel le calcul de l'indice de bande de fréquence comprend un calcul du rapport entre une limite supérieure et une limite inférieure de la bande de fréquence du signal du corrélateur de bruit de fuite dans laquelle un bruit de fuite est présent ;
      - indice de cohérence, dans lequel le calcul de l'indice de cohérence comprend le calcul, en utilisant la bande passante dans laquelle la fuite est présente, du rapport entre une puissance de cohérence réelle du signal du corrélateur de bruit de fuite et une puissance de cohérence théorique ;
      - indice de phase, dans lequel l'indice de phase est lié à la phase de la densité spectrale croisée, l'indice de phase comprenant un calcul de superposition entre une phase de signal du corrélateur de bruit de fuite et une phase théorique calculée préalablement, ledit calcul de superposition n'étant aligné que lorsque la bande de fréquence sélectionnée contient un signal de bruit de fuite ;
      - indice de forme, dans lequel le calcul de l'indice de forme comprend une identification d'un deuxième pic le plus élevé dans un signal du corrélateur de bruit de fuite et la soustraction d'une unité ; ou
      - une combinaison de ceux-ci.

2. Procédé d'analyse selon la revendication 1, dans lequel l'indice de qualité est combiné avec un indice de pic, le calcul de l'indice de pic comprenant le calcul de la valeur maximale du signal du corrélateur de bruit de fuite.

3. Procédé d'analyse selon la revendication 1 ou 2, dans lequel l'étape de classification de la qualité de mesure comprend l'application d'un outil statistique basé sur une pluralité d'indices de qualité calculés, le calcul étant effectué au moyen d'une des fonctions suivantes : moyenne arithmétique, médiane, mode, moyenne géométrique ou moyenne harmonique.

4. Procédé d'analyse selon l'une quelconque des revendications précédentes, dans lequel le corrélateur de bruit de fuite utilise deux capteurs pour effectuer simultanément des mesures de bruit, les deux capteurs étant reliés à la conduite avec une distance les séparant.

5. Système d'analyse et de fourniture d'un indice de qualité pour un corrélateur de bruit de fuite destiné à la détection de fuites dans une conduite, ledit système comprenant :

   a. au moins un outil de réception et d'affichage de signal de corrélateur de bruit de fuite configuré pour recevoir un signal provenant du corrélateur de bruit de fuite ;
   b. un outil de calcul d'au moins un indice de qualité du signal du corrélateur de bruit de fuite ; et
   vc. classification de la qualité de mesure du du corrélateur de bruit de fuite, sur la base dudit au moins un indice de qualité calculé ;

   **caractérisé en ce que** :

   - l'indice de qualité du signal est défini par au moins un des indices suivants :

- indice de bande de fréquence, dans lequel le calcul de l'indice de bande de fréquence comprend un calcul du rapport entre une limite supérieure et une limite inférieure de la bande de fréquence du signal du corrélateur de bruit de fuite dans laquelle un bruit de fuite est présent ;

- indice de cohérence, dans lequel le calcul de l'indice de cohérence comprend le calcul, en utilisant la bande passante dans laquelle la fuite est présente, du rapport entre une puissance de cohérence réelle du signal du corrélateur de bruit de fuite et une puissance de cohérence théorique ;

- indice de phase, dans lequel l'indice de phase est lié à la phase de la densité spectrale croisée, l'indice de phase comprenant un calcul de superposition entre une phase de signal du corrélateur de bruit de fuite et une phase théorique calculée préalablement, ledit calcul de superposition n'étant aligné que lorsque la bande de fréquence sélectionnée contient un signal de bruit de fuite ;

- indice de forme, dans lequel le calcul de l'indice de forme comprend une identification d'un deuxième pic le plus élevé dans un signal du corrélateur de bruit de fuite et la soustraction d'une unité ; ou

une combinaison de ceux-ci.

6.  Système d'analyse selon la revendication 5, dans lequel l'indice de qualité est combiné avec un indice de pic, le calcul de l'indice de pic comprenant le calcul de la valeur maximale du signal du corrélateur de bruit de fuite.

7.  Système d'analyse selon la revendication 5 ou 6, dans lequel l'outil d'affichage graphique comprend une classification de la qualité du signal du corrélateur de bruit de fuite, sur la base d'un calcul avec un outil statistique basé sur une pluralité d'indices calculés, le calcul étant effectué au moyen d'une des fonctions suivantes : moyenne arithmétique, médiane, mode, moyenne géométrique ou moyenne harmonique.

8.  Système d'analyse selon l'une quelconque des revendications 5 à 7, dans lequel le corrélateur de bruit de fuite utilise deux capteurs pour effectuer simultanément des mesures de bruit, les deux capteurs étant raccordables à la conduite avec une distance les séparant.

Figure 1

Figure 2

Figure 3

Normalized Delay

Figure 4a

Figure 4b

Figure 5a

Figure 5b

Figure 6a

Figure 6b

Figure 7a

Figure 7b

Figure 8

Figure 9a

Figure 9b

**EP 4 083 821 B1**

**Patent documents cited in the description**

- JP 2017187337 B
- JP 2017173034 B
- CN 107063584
- US 6453247 B
- JP 2000055771 A